# EUROPEAN PATENT SPECIFICATION

(11) **EP 0 558 849 B1**
(45) Date of publication and mention of the grant of the patent: **10.07.1996**
(21) Application number: 92309068.2
(22) Date of filing: 05.10.1992
(51) Int. Cl.: A01K 63/06

(54) **Heater device for aquarium tank**
Heizungsvorrichtung für Aquarium-Gehäuse
Dispositif de chauffage pour réservoir aquarium

(30) Priority: 04.03.1992 JP 19924/92 U
(43) Date of publication of application: 08.09.1993
(73) Proprietor: NISSO INDUSTRY CO., LTD., Tokyo (JP)
(72) Inventor: Tsuchiya, Toshihiro, Adachi-ku, Tokyo (JP); Hashimoto, Hiraoaki, Adachi-ku, Tokyo (JP)
(74) Representative: Smith, Norman Ian

(56) References cited:
- EP-A- 0 379 313
- US-A- 4 072 847

## Description

This invention relates to a heater device for an aquarium tank for keeping or raising aquarium fish such as tropical fish.

The aquarium tank is provided with a heater device for keeping the temperature of water in the tank optimum for the fish being kept. Heater devices of this kind are classified roughly into three different types: electronic thermostats, bimetal thermostats and auto-heaters. A typical electronic thermostat comprises a controller including a temperature sensor section to be placed in the water, a resin case accommodating a control circuit and a temperature setting section for setting the temperature to be sensed by the temperature sensor section, a heater unit having a heating filament sealed in a quartz glass tube, a sensor cord connecting the temperature sensor section and the controller to each other, a receptacle connected to the heater unit, a receptacle cord for connecting the receptacle and the controller, and a power source plug and a power source cord for connecting the receptacle and controller to a commercial power source. A typical bimetal thermostat comprises a controller having a temperature sensor section, a temperature setting section and a temperature control section accommodated in a glass tube, a heater unit, a receptacle connected to the heater unit, and a power source plug and a power source cord for connecting the receptacle and the controller to a commercial power source. A typical auto-heater comprises a heater unit having a temperature control section serving concurrently as a temperature sensor, such as a thermal reed switch preset to a predetermined temperature in advance, and a heat generator, and a power source plug and a power source cord for supplying power to the heater unit. The temperature control section and heat generator are sealed in a quartz glass tube.

Of the above prior art heater devices, the electronic and bimetal thermostats are constructed with the controller and heater unit as separate components, and places for installing them have to be provided in the tank in advance. The controller and heater unit thus pose accommodation and installation space problems in a case where the heater device is used for a compact tank in which such accessories as a filter pump and an illumination system are built in as integral components. The auto-heater has a comparatively small size thanks to the integration of the temperature control section and the heater unit. On the demerit side, however, it does not allow the preset temperature to be changed, its sealed temperature control component has low power capacity, and it does not allow a high capacity heater to be used. Therefore, limitations are imposed on the use of this type of heater device.

An object of this invention is to provide a heater device for an aquarium tank, which is small in size but permits use of a high capacity heater and ready preset temperature changes. Such a device is known for example from EP-A-0,379,313.

According to this invention, there is provided a heater device for an aquarium tank, comprising a heater section, a temperature sensor section including a control section, and a power source plug for connecting the heater section and the temperature sensor section to a commercial power source, the heater section and the temperature sensor section are integrally accommodated as components in a heat-resistant accommodating member to constitute a heater unit, and that the heater unit and the power source plug unit are connected to each other by a cord, the heater device being characterised in: that the temperature sensor section includes a temperature setting section for setting the response temperature of the temperature sensor section, and that the temperature setting section is built into the power source plug to constitute a power source plug unit.

With the above heater device according to the invention, in which the heater section and the temperature sensor section including the control section are accommodated as integrated components in the heat-resistant accommodating member while the temperature setting section for setting a sensitive temperature of the temperature sensor section is built into the power source plug, no space for installing a controller is needed. The heater device thus can be used for compact tanks. In addition, although the heater unit and the temperature sensor section are accommodated in the same housing member, they are disposed in different chambers. It is thus possible to use a high capacity heater, and the heater device can be used for large-sized tanks as well.

The above and other objects and features of the invention will become more apparent from the following description when the same is read with reference to the accompanying drawings, in which:
Figure 1 is a plan view, partly in section, showing one embodiment of the heater device according to the invention;
Figure 2 is a sectional view showing a power source plug unit of the heater device shown in Figure 1; and
Figure 3 is a circuit diagram of the heater device shown in Figure 1.

Referring now to the drawings illustrating one embodiment of the heater device for an aquarium tank according to the invention, the heater device 1 comprises a heater unit 5 including a heater section 2, a temperature sensor section 3 and a control section 4 for controlling the heater section 2, a power source plug unit 7 including a temperature setting section 6 for setting the temperature to be sensed by the temperature sensor section 3, and a cord 8 for electrically connecting the heater unit 5 and the power source plug unit 7.

The heater unit 5 comprises a tubular member 9 of a heat-resistant material such as a ceramic. The interior of the tubular member 9 is divided by a pair of first and second partitioning members 22 and 23 into a pair of first and second chambers 5a and 5b. The heater section 2 comprises a heating filament 12 accommodated as a heat source in the first chamber 5a. The temperature sensor section 3 comprises a sensor element 21 and a control section 4. The sensor element 21 is accommodated in the second chamber 5b to sense the temperature of the water in the tank. The control section 4 controls the power supplied to the heating filament 12.

In the illustrated embodiment, the heating filament 12 in the first chamber 5a is accommodated such that it is folded to sandwich an insulating member 16 of mica or like material. The space in the chamber 5a is filled with insulating sand 17. The chamber 5a has its free end portion closed by a shield member 18 and a partitioning member 19, and a cap 10 filled with silicon 20 is fitted on the free end portion to prevent intrusion of water into the chamber 5a.

A lead wire 13 passes from the control section 4 of the temperature sensor section 3 in the second chamber 5b through the first and second partitioning members 22 and 23 and into the first chamber 5a. The lead wire 13 is insulated by a glass tube 15 and has its free end electrically connected by a pressure connector 14 to one end of the heating filament 12.

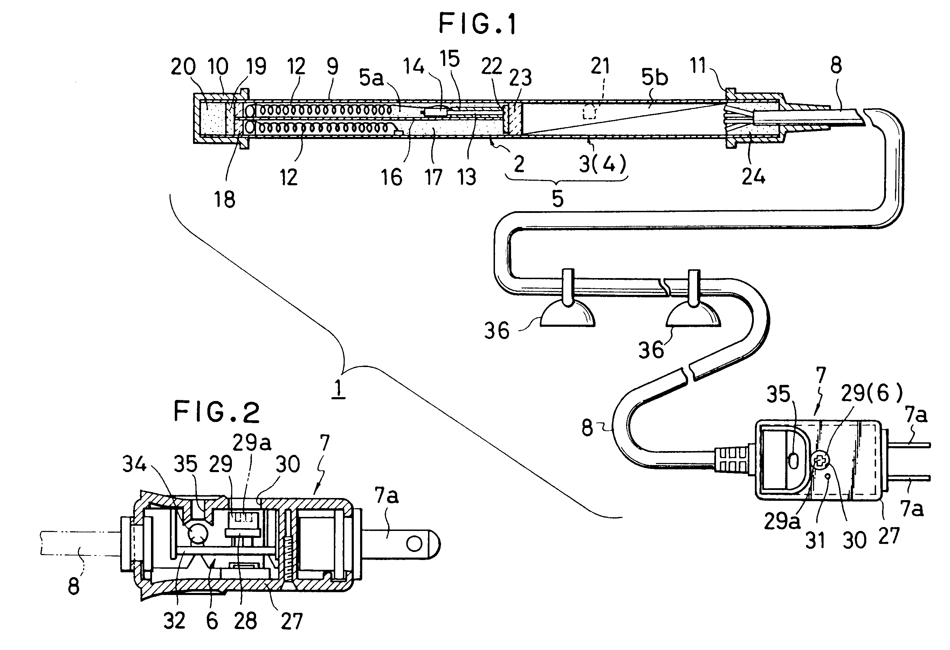

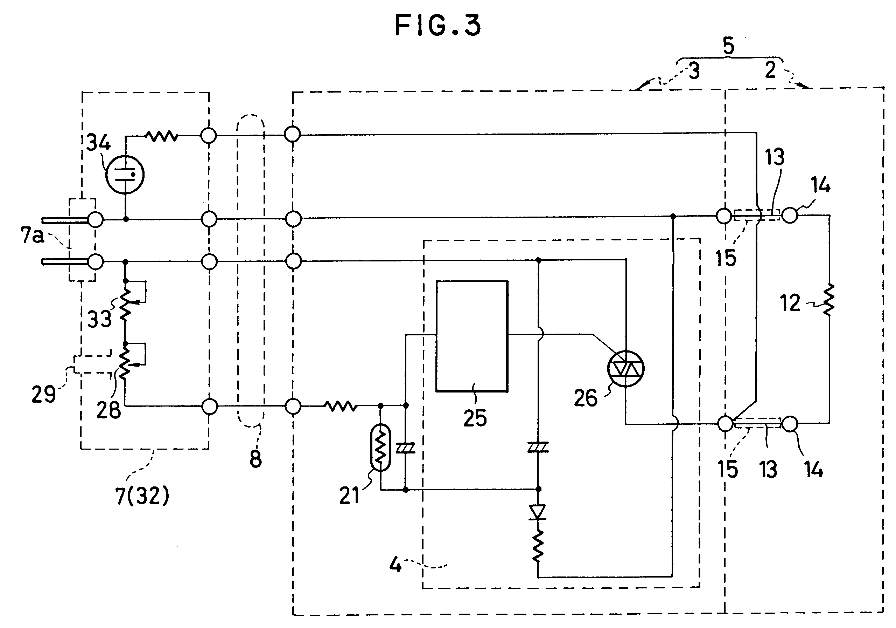

Figure 3 shows an example of the circuit of the control section 4. As shown, the circuit includes an IC 25 and a triac 26. The gate of the triac 26 is triggered via the IC 25 for controlling the power supplied to the heating filament 12 in accordance with changes in the resistance of the sensor element 21. Returning to Figure 1, the second chamber 5b has its free end portion closed by a sealing cap 11 fitted thereon. One end of the cord 8 is inserted into the cap 11, and the cap 11 is filled with silicon 24 to reliably prevent intrusion of water into the second chamber 5b. Heat generated in the heater section 2 is blocked by the two partitioning members 22 and 23 so that it will not be directly conducted to the temperature sensor section 3.

As shown in Figure 2, the power source plug unit 7 includes a power supply plug section 7a which can be inserted into a commercial power supply receptacle. The unit also has a splittable case 27 which accommodates a variable resistor 28 for setting the temperature to be sensed by the sensor element 21, the resistance of the variable resistor 28 being variable by an external operation. In the illustrated embodiment, for example, an operating member 29 having an engagement groove 29a is fitted on a shaft of the variable resistor 28. The resistance of the variable resistor 28 is set to a value corresponding to a preset temperature to be sensed by turning a screwdriver or like tool fitted in the engagement groove 29a through an operation hole 30 formed in the case 27. The case 27 is suitably provided with a mark 31 as an index for temperature setting (Figure 1). The operating member 29 may further have a portion projecting outward from the case 27 so that it can be operated directly with the fingers.

The variable resistor 28 is provided as a chip component on a printed circuit board 32. The printed circuit board 32 is formed with a circuit in which one of the terminals of the power supply plug section 7a, the variable resistor 28 for temperature setting and the sensor element 21 are connected in series. In the embodiment shown in Figure 3, a variable resistor 33 for initial adjustment is connected in series with the variable resistor 28 for temperature setting to permit the temperature setting to be readily carried out. Further, a neon tube 34 is provided on the printed circuit board 32 and connected in parallel with the heating filament 12. Thus, when the heating filament 12 is being supplied with power, the neon tube 34 emits light through a window 35 (Figure 2) formed in the case 27, thus providing a visible indication of the operating state of the heating filament 12.

When using the heater device 1 having the above construction, the heater unit 5 is disposed horizontally near the bottom of the tank, and the cord 8 is secured to a glass plate inner surface with securement members 36, which may be suction cups provided on the cord 8 at intermediate positions thereof. Then, the response temperature of the sensor element 21 of the temperature sensor section 3 is set to a desired value by turning the operating member 29 of the variable resistor 28 in the power source plug unit 7, and the plug section 7a is inserted into a receptacle (not shown). As the sensor element 21, it is advantageous to use a thermistor.

When the temperature of the water in the tank becomes lower than the preset temperature, the resistance of the sensor element 21 increases to cause the triac 26 to conduct via the IC 25, thus supplying power to the heating filament 12. With the power supplied to it, the heating filament 12 generates heat to elevate the water temperature. While power is supplied to the heating filament 12, the neon tube 34 provided in the power source plug unit 7 emits light. Thus, the state of conduction of the heating filament 12 can be confirmed through the window 35. As the water temperature rises to the preset temperature, the resistance of the sensor element 21 decreases. With this change in the resistance, the triac 26 is made non-conductive via the IC 25, thus discontinuing the power supply to the heating filament 12.

As explained above, the supply of power to the heating filament 12 of the heater section 2 is controlled in accordance with the operation of the temperature sensor section 3. In this way, the temperature of the water in the tank can be maintained at the preset temperature.

In the above illustrated embodiment, the heater unit 5 comprises the heater section 2 and the temperature sensor section 3 accommodating the control section 4 and a thermistor as the temperature sensor element 21. However, it is also possible to accommodate the control section 4 in the power source plug unit 7, while providing only the heater section 2 and temperature sensor element 21 in the heater unit 5.

While the invention has been described in conjunction with the illustrated embodiment, the embodiment is by no means limitative, and various changes and modifications are possible without departing from the scope of the invention as set forth in the appended claims. For example, it is possible to replace the heating filament used in the heater section with another type of heating element such as a ceramic heater or to replace the triac with a different switching element.

As has been described in the foregoing, the heater device according to the invention has a heater unit in which a heater section and a temperature sensor section are integrally accommodated as components in a heat-resistant tubular member, and a power source plug unit including a built-in temperature setting section. Thus, since, unlike in the prior art devices, there is no need for a separate controller in the tank, no installation space problems arise and the heater device can be readily used with a compact tank. Further, since the temperature setting section is provided inside the plug unit, the temperature setting operation is facilitated and the likelihood of this section being wetted by water at the time of the cleaning the tank or water replacement is substantially eliminated, thus ensuring a high degree of safety. Further, while the heater section is provided integrally with the temperature sensor section, it is substantially independent, and thus may have a high heat capacity.

## Claims

1. A heater device (1) for an aquarium tank, comprising a heater section (2), a temperature sensor section (3) including a control section (4), and a power source plug for connecting said heater section and said temperature sensor section to a commercial power source,
said heater section and said temperature sensor section being integrally accommodated as components in a heat-resistant accommodating member (9) to constitute a heater unit (5), and
said heater unit and said power source plug unit being connected to each other by a cord (8),
said heater device characterised in:
that said temperature sensor section includes a temperature setting section (6) for setting a response temperature of said temperature sensor section, and
that said temperature setting section is built into said power source plug to constitute a power source plug unit (7).

2. The heater device according to claim 1, characterised in that the interior of said heater unit is divided by a partitioning member (22, 23) into a first chamber (5a) and a second chamber (5b), that said heater section is accommodated in said first chamber and that said temperature sensor section is accommodated in said second chamber.

3. The heater device according to claim 1, characterised in that said control section (4) is provided in said power source plug.

4. The heater device according to claim 3, characterised in that said control section (4) is a control circuit including an IC (25) and a triac (26).

## Patentansprüche

1. Heizvorrichtung für ein Aquariumgehäuse mit einem Heizungsteil (2), einem Temperaturfühlerteil (3) mit einem Steuerteil (4) und einem Stopfen als Energiequelle zum Verbinden des Heizungsteiles und des Temperaturfühlerteiles mit einer allgemein üblichen Energiequelle, wobei der Heizungsteil und der Temperaturfühlerteil als Bestandteile einer Gesamtheit und vollständig in einem temperaturresistenten Gehäuseglied (9) angeordnet sind, um eine Heizeinheit (5) zu bilden, wobei der Heizungsteil und die Energiequellenanschlußstopfeneinheit miteinander durch ein Kabel (8) verbunden sind und wobei die Heizvorrichtung **dadurch gekennzeichnet** ist, daß der Temperaturfühlerteil ein Temperatureinstellteil (6) einschließt, um eine vom Temperaturfühlerteil abhängige Temperatur zu bestimmen und daß das Temperatureinstellteil in den Energiequellenanschlußstopfen eingefügt ist.

2. Heizvorrichtung nach Anspruch 1, **dadurch gekennzeichnet, daß** das Innere des Heizungsteils durch ein Unterteilungsglied (22,23) in eine erste Kammer (5a) und eine zweite Kammer (5b) unterteilt ist, daß der Heizungsteil in die erste Kammer eingefügt ist und der Temperaturfühlerteil in die zweite Kammer eingefügt ist.

3. Heizvorrichtung nach Anspruch 1, **dadurch gekennzeichnet, daß** der Steuerteil (4) in den Energiequellenanschlußstopfen eingefügt ist.

4. Heizvorrichtung nach Anspruch 3, **dadurch gekennzeichnet, daß** der Steuerteil (4) ein Steuerkreis mit einem integrierten Schaltkreis (IC,25) und einem bidirektionalen Wechselstrom-Thyristor (Triac,26) ist.

## Revendications

1. Un dispositif de chauffage (1) pour un réservoir d'aquarium, comprenant une section de chauffage (2), une section de prise de température (3) comportant une section de commande (4), et une fiche de source d'énergie électrique pour relier ladite section de chauffage et ladite section de prise de température à une source commerciale d'énergie électrique,
ladite section de chauffage et ladite section de prise de température étant intégrées en tant qu'éléments dans un organe de mise en place (9) résistant à la chaleur afin de constituer un ensemble de chauffage (5), et ledit bloc de chauffage et ladite fiche de source d'énergie électrique étant reliés l'un à l'autre par un cordon (8), ledit dispositif de chauffage caractérisé en :
ce que ladite section de prise de température comprend une section de réglage de température (6) pour régler une température de réponse de ladite section de prise de température, et en ce que ladite section de réglage de température est incorporée dans ladite fiche de source d'énergie électrique pour constituer un bloc à fiche de source d'énergie électrique (7).

2. Le dispositif de chauffage suivant la revendication 1, caractérisé en ce que l'intérieur dudit bloc de chauffage est divisé par un élément de cloisonnement (22, 23) en une première chambre (5a) et une seconde chambre (5b), en ce que ladite section de chauffage est placée dans ladite première chambre et en ce que ladite section de prise de température est placée dans ladite seconde chambre.

3. Le dispositif de chauffage suivant la revendication 1, caractérisé en ce que ladite section de commande (4) est prévue dans ladite fiche de source d'énergie électrique.

4. Le dispositif de chauffage suivant la revendication 3, caractérisé en ce que ladite section de commande (4) est un circuit de commande comprenant un circuit intégré (25) et un triac (26).
